Europäisches Patentamt

European Patent Office

Office européen des brevets

(11) Veröffentlichungsnummer: **0 260 407 B1**

# (12) EUROPÄISCHE PATENTSCHRIFT

(45) Veröffentlichungstag der Patentschrift: **02.01.92**

(21) Anmeldenummer: **87110584.7**

(22) Anmeldetag: **22.07.87**

(51) Int. Cl.⁵: **C12C 11/00**, C12F 3/06

(54) **Verfahren zur Rückgewinnung von Bier.**

(30) Priorität: **16.09.86 DE 3631470**

(43) Veröffentlichungstag der Anmeldung:
**23.03.88 Patentblatt 88/12**

(45) Bekanntmachung des Hinweises auf die
Patenterteilung:
**02.01.92 Patentblatt 92/01**

(84) Benannte Vertragsstaaten:
**BE DE ES FR GB IT NL SE**

(56) Entgegenhaltungen:
**GB-A- 1 234 317**

**L. NARZISS: "Abriss der Bierbrauerei", 4.
Auflage, 1980, Seiten 307-308, Ferdinand
Enke Verlag, Stuttgart, DE**

**CHEMICAL ABSTRACTS, Band 81, Nr. 13, 30.
September 1974, Seite 350, Zusammenfassung Nr. 76454u, Columbus, Ohio, US; A.C.
WALKLIN: "Separation problems in the manufacture of yeast extract", & FILTR. SEPAR.
1974, 11(3), 265-6, 268, 288**

**CHEMICAL ABSTRACTS, Band 84, Nr. 13, 29.
März 1976, Seite 361, Zusammenfassung Nr.
87901a, Columbus, Ohio, US; E. BACA:**

**"Utilization of yeast les-by-product in beer
production", & PRZEM. FERMENT. ROLNY
1975, 19(10), 11-13**

(73) Patentinhaber: **Westfalia Separator AG
Werner-Habig-Strasse 1 Postfach 3720
W-4740 Oelde 1(DE)**

(72) Erfinder: **Swinkels, Wilhelmus J.P.M.,
Dipl.-Braumeister
Koppelstraat 8
NL-5741 GC Beek en Donk(NL)**
Erfinder: **Wackerbauer, Karl, Prof. Dr.-Ing.
Artuswall 13
W-1000 Berlin 28(DE)**
Erfinder: **Stein, Udo
Twieluchtstrasse 6
W-4730 Ahlen(DE)**

## Beschreibung

Die Erfindung bezieht sich auf ein Verfahren zur Rückgewinnung von Bier aus der Gärkeller- oder Lagerkellerhefe von Brauereien, wobei die in den Zulauf einer Zentrifuge geleitete Hefe in eine konzentrierte Feststoffphase und eine bierhaltige Flüssigkeit zerlegt wird.

Bei den bisher bekanntgewordenen Verfahren hat man sich darauf beschränkt, die Gärkeller- oder Lagerkellerhefe mittels Zentrifugen, Pressen oder Filter zu konzentrieren, um das in der Hefe enthaltene Bier zurückzugewinnen. Die dabei erzielbaren Trockengehalte im Hefekonzentrat liegen bei 20 - 35 %. Ein wesentlicher Anteil des in der Hefe enthaltenen Bieres wird daher immer noch einer minderwertigen Verwendung zugeführt, wenn es mit der Hefe als Futtermittel verkauft wird.

In der GB-PS 1 234 317 wird ein Verfahren zur Extraktion von Hefe beschrieben. Dieses Dokument beschreibt insbesondere ein Verfahren, in dem Hefe von fermentierter Flüssigkeit getrennt wird, wobei während der zentrifugalen Behandlung die Hefe mit Wasser gewaschen wird. Ziel dieses Waschvorganges ist die Erzielung einer hohen Trockensubstanz in der konzentrierten Hefe. Eine Rückgewinnung von Bier ist nach diesem Verfahren nicht möglich.

In vielen Ländern wird die Biersteuer nicht nach dem Bierausstoß berechnet, sondern nach der Sudmenge. Aus diesem Grunde haben die Brauereien in diesen Ländern besonders großes Interesse, nach der alkoholischen Gärung aus den anfallenden Nebenprodukten den größtmöglichen Anteil an Bier zurückzugewinnen.

Aufgabe der Erfindung ist es, ein Verfahren zu schaffen, mit dem der Anteil des zurückgewonnenen Bieres bei der zentrifugalen Behandlung von Gärkeller- oder Lagerkellerhefe erhöht wird.

Diese Aufgabe wird dadurch gelöst, daß die Hefe vor der zentrifugalen Behandlung unmittelbar im Zulauf der Zentrifuge mit einer Extraktionsflüssigkeit vermischt wird, die Temperatur der Extraktionsflüssigkeit max. +2 °C beträgt und als Extraktionsflüssigkeit Wasser verwendet wird.

Durch die Zugabe der Extraktionsflüssigkeit wird das die Hefezellen umgebende Bier verdünnt. Die von der Zentrifuge ablaufende Feststoffphase enthält bei gleichem Flüssigkeitsanteil, verglichen mit den bekannten Verfahren, damit weniger Bier entsprechend dem gewählten Mischungsverhältnis zwischen der Extraktionsflüssigkeit und dem Flüssigkeitsanteil in der Gärkeller- oder Lagerkellerhefe. Durch die Vermischung der Extraktionsflüssigkeit und der Hefe unmittelbar im Zulauf der Zentrifuge wird die Kontaktzeit kurz gehalten. Dadurch wird vermieden, daß außer dem Bier Hefestoffwechselprodukte aus dem Inneren der Hefezelle in die Extraktionsflüssigkeit gelangen. Die Temperatur der Extraktionsflüssigkeit von +2 °C begünstigt die Erzielung einer guten Qualität des zurückgewonnenen Bieres.

Es hat sich als vorteilhaft herausgestellt, die Zulaufleistungen der Extraktionsflüssigkeit und der Hefe am Zulauf der Zentrifuge so einzustellen, daß sich ein Mischungsverhältnis Extraktionsflüssigkeit : Hefe von 7 : 1 ergibt.

Bei einer bevorzugten Ausführungsform des Verfahrens wird die benötigte Menge Extraktionsflüssigkeit in einem Rezirkulationstank vorgelegt, bevor sie in den Zulauf der Zentrifuge geleitet wird, wobei die aus dem Flüssigkeitsablauf der Zentrifuge ablaufende Flüssigkeit in den Rezirkulationstank zurückgeführt wird. Die Extraktionsflüssigkeit kann somit wiederholt mit der die Zentrifuge durchströmenden Hefe in Kontakt gebracht werden und damit trotz kurzer Kontaktzeit einen hohen Biergehalt erzielen. Das im Rezirkulationstank vorgelegte Volumen Extraktionsflüssigkeit sollte dabei höchstens 75 % des nach der Extraktion vorhandenen Volumens an bierhaltiger Flüssigkeit betragen. Nach Beendigung des Extraktionsvorganges sollte die Extraktionsflüssigkeit einen Plato-Gehalt von 3 - 15 % besitzen.

Bevor die Extraktionsflüssigkeit in den Rezirkulationstank gefüllt wird, sollte sie gekühlt werden, um eine nachteilige Erwärmung der Hefe beim Extraktionsvorgang zu vermeiden.

Die durch die zentrifugale Behandlung hervorgerufene Erwärmung der Extraktionsflüssigkeit wird durch einen Kühler kompensiert, der dem Flüssigkeitsablauf der Zentrifuge nachgeschaltet ist.

Das als Extraktionsflüssigkeit verwendete Wasser wird zuvor mittels Kationenaustauscher, Filter, UV-Sterilisator, Entlüfter behandelt und karbonisiert und gekühlt.

Die Qualität der so gewonnenen bierhaltigen Flüssigkeit läßt sich noch verbessern, wenn sie einer Kläreinrichtung zugeführt wird, der ein Kühler vorgeschaltet ist.

Als Kläreinrichtung wird bevorzugt eine Hochleistungsklärzentrifuge verwendet, die eine noch vorhandene Trübung beseitigt. Die Trübung ist auf unlösliche Gerbstoff-Proteinkomplexe zurückzuführen. Dabei wird ein Trübungswert von 0,5 - 1,5 EBC angestrebt.

Weitere vorteilhafte Ausgestaltungen sind den restlichen Unteransprüchen zu entnehmen.

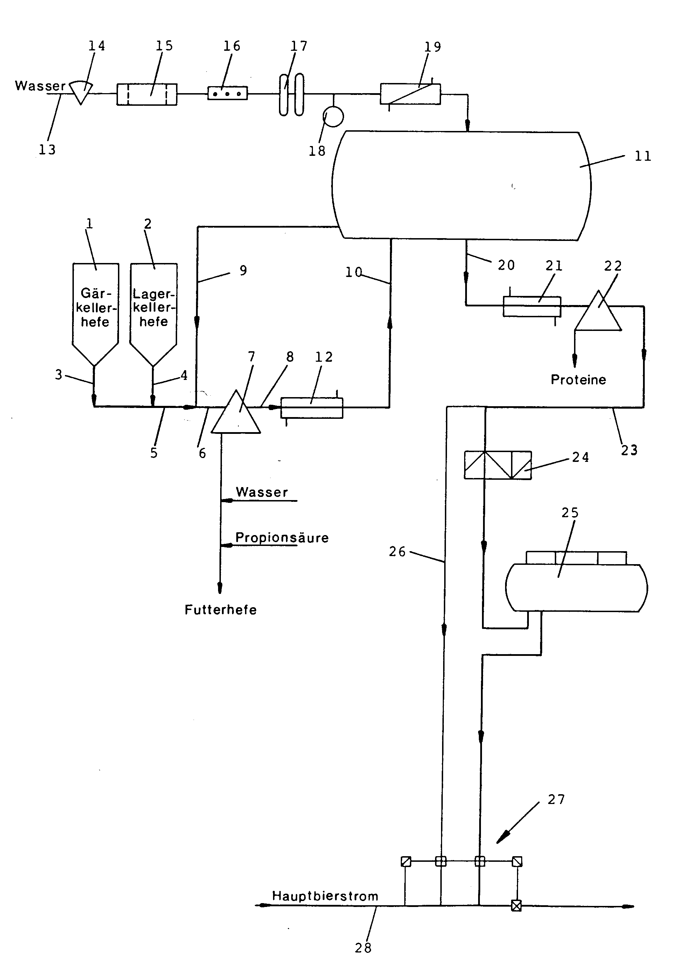

Ein Ausführungsbeispiel der Erfindung ist in der Zeichnung dargestellt und wird nachstehend näher erläutert.

In der Zeichnung sind zylindro-konische Tanks für Gärkellerhefe und Lagerkellerhefe 1 bzw. 2 mit ihren Ablaufleitungen 3 und 4 an eine Leitung 5 angeschlossen, die in den Zulauf 6 einer Zentrifuge mündet. Zulauf 6 und Ablauf 8 der Zentrifuge 7 sind über Rezirkulationsleitungen 9 und 10 mit einem Rezirkulationstank 11 verbunden. In der Rezirkulationsleitung 10 ist ein Kühler 12 vorgesehen. Der Rezirkulationstank 11 kann über eine Leitung 13 gefüllt werden, in der ein Kationenaustauscher 14, ein Filter 15, ein UV-Sterilisator 16, ein Entlüfter 17, ein CO2-Imprägnierer 18 und ein Kühler 19 zur Konditionierung der Extraktionsflüssigkeit vorgesehen sind. Vom Rezirkulations tank 11 führt eine Entleerungsleitung 20 mit einem Kühler 21 zu einer Hochleistungsklärzentrifuge 22, deren Ablauf 23 über einen Pasteurisator 24 und einen Gärbehälter 25 oder direkt über eine Leitung 26 mit einer Verschneidevorrichtung 27 in einer Bierleitung 28 verbunden ist.

Zunächst wird im Rezirkulationstank die benötigte Menge konditionierten Wassers als Extraktionsflüssigkeit vorgelegt, die etwa 75 % des nach der Extraktion vorhandenen Volumens an bierhaltiger Flüssigkeit betragen sollte. Diese Extraktionsflüssigkeit wird über die Zentrifuge 7 im Kreislauf gefahren, bevor anschließend die Hefe im Zulauf 6 der Zentrifuge 7 der Extraktionsflüssigkeit zugemischt wird. In der Zentrifuge werden Extraktionsflüssigkeit und Hefe sofort wieder getrennt, wodurch nur eine sehr kurze Kontaktzeit zwischen der Extraktionsflüssigkeit und der Hefe besteht.

Der der Zentrifuge 7 nachgeschaltete Kühler 12 kompensiert eine Erwärmung der Extraktionsflüssigkeit durch den Zentrifugationsvorgang.
Durch die kurze Kontaktzeit und die niedrige Temperatur der Extraktionsflüssigkeit wird ein unerwünschter Übergang von Hefestoffwechselprodukten auf die Extraktionsflüssigkeit verhindert.
Die Extraktionsflüssigkeit wird so lange über die Zentrifuge geleitet, bis ein Plato-Gehalt von etwa 3 - 15 % erreicht ist.

Nach Beendigung des Extraktionsvorganges wird die Extraktionsflüssigkeit der Hochleistungsklärzentrifuge 2 zugeführt.

Derartige Zentrifugen arbeiten mit Zentrifugalbeschleunigungen von bis zu 15.000 g und sind damit in der Lage, auch die noch im Bier enthaltenen unlöslichen Gerbstoff-Proteinkomplexe abzuschleudern, die eine Resttrübung des Bieres hervorrufen.
Die mit den Hochleistungsklärzentrifugen erzielbaren Trübungswerte liegen zwischen 0,5 - 1,5 EBC.
Bevor die so behandelte Extraktionsflüssigkeit mit dem fertigen Bier verschnitten wird, kann es vorteilhaft sein, eine Pasteurisierung und Aufkräusung oder eine Rückführung in den Gärprozeß oder Sudhausbereich vorzunehmen.

Die bei dem Extraktionsvorgang durch die Zentrifuge 7 abgeschiedene Hefe fällt mit einer Trokkensubstanz von 19 % an. Sie wird durch Zugabe von Wasser auf einen Trockensubstanzgehalt von 13 % gebracht, um sie fließfähig zu machen, und durch Zugabe von Propionsäure konserviert. Die so behandelte Hefe kann als Futtermittel verkauft werden.

**Patentansprüche**

1. Verfahren zur Rückgewinnung von Bier aus der Gärkeller- oder Lagerkellerhefe von Brauereien, wobei die in den Zulauf einer Zentrifuge geleitete Hefe in eine konzentrierte Feststoffphase und eine bierhaltige Flüssigkeit zerlegt wird, **dadurch gekennzeichnet,** daß die Hefe vor der zentrifugalen Behandlung unmittelbar im Zulauf der Zentrifuge mit einer Extraktionsflüssigkeit vermischt wird, die Temperatur der Extraktionsflüssigkeit max. +2 $^\circ$C beträgt und als Extraktionsflüssigkeit Wasser verwendet wird.

2. Verfahren nach Anspruch 1, dadurch gekennzeichnet, daß die Zulaufleistungen der Extraktionsflüssigkeit und der Hefe zum Zulauf der Zentrifuge in einem Verhältnis von mindestens 7 : 1 stehen.

3. Verfahren nach Anspruch 1 und 2, dadurch gekennzeichnet, daß eine größere Menge Extraktionsflüssigkeit in einem Rezirkulationstank vorgelegt wird, bevor sie in den Zulauf der Zentrifuge geleitet wird, und die aus dem Flüssigkeitsablauf der Zentrifuge ablaufende bierhaltige Flüssigkeit in den Rezirkulationstank zurückgeführt wird.

4. Verfahren nach Anspruch 3, dadurch gekennzeichnet, daß das Volumen der im Rezirkulationstank vorgelegten Extraktionsflüssigkeit max. 75 % des nach der Extraktion vorhandenen Volumens an bierhaltiger Flüssigkeit beträgt.

5. Verfahren nach einem der Ansprüche 1 bis 4, dadurch gekennzeichnet, daß die aus der Zentrifuge ablaufende bierhaltige Flüssigkeit am Ende des Extraktionsvorganges einen Platogehalt von 3 - 15 % besitzt.

6. Verfahren nach einem der Ansprüche 3 bis 5, dadurch gekennzeichnet, daß die Extraktionsflüssigkeit vor der Einleitung in den Rezirkulationstank gekühlt wird.

7. Verfahren nach einem der Ansprüche 3 bis 6, dadurch gekennzeichnet, daß die aus der Zentrifuge ablaufende bierhaltige Flüssigkeit gekühlt wird, bevor sie in den Rezirkulationstank zurückgeführt wird.

8. Verfahren nach einem der Ansprüche 1 bis 7, dadurch gekennzeichnet, daß das Wasser vor der Verwendung als Extraktionsflüssigkeit mittels Kationenaustauscher, Filter, UV-Sterilisator, Entlüfter behandelt sowie karbonisiert und gekühlt wurde.

9. Verfahren nach einem der Ansprüche 3 bis 8, dadurch gekennzeichnet, daß der Inhalt des Rezirkulationstanks nach Beendigung des Extraktionsvorganges einer Kläreinrichtung zugeführt wird.

10. Verfahren nach Anspruch 9, dadurch gekennzeichnet, daß der Kläreinrichtung ein Kühler vorgeschaltet ist.

11. Verfahren nach Anspruch 9 oder 10, dadurch gekennzeichnet, daß als Kläreinrichtung eine Hochleistungsklärzentrifuge verwendet wird.

12. Verfahren nach einem der Ansprüche 1 bis 11, dadurch gekennzeichnet, daß die bierhaltige Flüssigkeit mit Stabilisierungsmitteln physikalisch-chemisch stabilisiert wird.

13. Verfahren nach einem der Ansprüche 1 bis 12, dadurch gekennzeichnet, daß die bierhaltige Flüssigkeit mit CO2 oder einem anderen Inertgas so versetzt wird, daß eine Wäsche der Flüssigkeit stattfindet.

14. Verfahren nach einem der Ansprüche 1 bis 13, dadurch gekennzeichnet, daß die bierhaltige Flüssigkeit dem Sudhausprozess inclusiv dem Trubentfernungsprozeß zugeführt wird.

**Claims**

1. Process for the recovery of beer from fermentation-cellar or lager-cellar yeast in breweries, whereby the yeast introduced into the intake of a centrifuge is separated into a concentrated solid phase and a liquid phase that contains beer **characterized in** that the yeast is mixed with an extraction liquid directly in the intake into the centrifuge prior to centrifugal processing, the temperature of the extraction liquid is no higher than +2 °C and water is used as extraction liquid.

2. Process as in claim 1 characterized in that the feed capacities of the extraction liquid and the yeast to the intake of the centrifuge are in a ratio of at least 7 : 1.

3. Process as in claims 1 and 2 characterized in that a relatively large volume of extraction liquid is stored in a recirculation tank before it is conveyed to the intake of the centrifuge and the beer-containing liquid leaving the liquid outlet of the centrifuge is returned to the recirculation tank.

4. Process as in claim 3 characterized in that the volume of extraction liquid available in the recirculation tank should equal no more than 75 % of the volume of liquid containing the beer existing subsequent to extraction.

5. Process as in one of the claims 1 to 4 characterized in that the beer-containing liquid discharging from the centrifuge at the end of the extraction process has a Plato content of 3 - 15 %.

6. Process as in one of the claims 3 to 5 characterized in that the extraction liquid is cooled before being fed into the recirculation tank.

7. Process as in one of the claims 3 to 6 characterized in that the beer-containing liquid leaving the centrifuge is cooled before it is returned to the recirculation tank.

8. Process as in one of the claims 1 to 7 characterized in that prior to use as extraction liquid the water is treated with cation exchanger, filter, ultraviolet sterilizer, de-aerator and, further, carbonated and cooled.

9. Process as in one of the claims 3 to 8 characterized in that the contents of the recirculation tank are fed to a clarifying device.

10. Process as in claim 9 characterized in that a cooler is installed upstream of the clarifier.

11. Process as in claim 9 or 10 characterized in that a high-performance centrifugal clarifier is used as clarifying device.

12. Process as in one of the claims 1 to 11 characterized in that the liquid containing the beer is physically and chemically stabilized with stabilizers.

13. Process as in one of the claims 1 to 12 characterized in that $CO_2$ or another inert gas is added to the beer-containing liquid so as to obtain a washing effect.

14. Process as in one of the claims 1 to 13 characterized in that the beer-containing liquid is fed to the brew-house process including the anti-clouding process.

**Revendications**

1. Procédé pour la récupération de bière à partir de levures provenant des caves de fermentation ou de stockage des brasseries, le bouillon de levure étant alimenté dans une centrifugeuse pour être séparé en une phase solide concentrée et en un phase liquide contenant de la bière, caractérisé par le fait que, directement à l'entrée de la centrifugeuse, la levure est mélangée avec un liquide d'extraction dont la température est de +2°C, ce liquide d'extraction étant constitué par de l'eau.

2. Procédé selon la revendication 1, caractérisé par le fait que le rapport entre les débits du liquide d'extraction et du bouillon de levure dans l'alimentation de la centrifugeuse est de 7:1.

3. Procédé selon les revendications 1 et 2, caractérisé par le fait qu'une quantité importante de liquide d'extraction est stockée dans un bac de recyclage avant d'être injectée dans l'alimentation de la centrifugeuse et que le liquide contenant de la bière sortant de la centrifugeuse est renvoyé dans le bac de recyclage.

4. Procédé selon la revendication 3, caractérisé par le fait que le volume du liquide d'extraction stocké dans le bac de recyclage est au maximum 75% de celui du liquide contenant de la bière, obtenu en fin de l'extraction.

5. Procédé selon l'une des revendications 1 à 4, caractérisé par le fait que le liquide contenant de la bière sortant de la centrifugeuse en fin du procédé d'extraction présente un contenu de plato de 3 à 15%.

6. Procédé suivant l'une des revendications 3 à 5, caractérisé par le fait que le liquide d'extraction est refroidi avant d'être envoyée dans le bac de recyclage.

7. Procédé selon l'une des revendications 3 à 6, caractérisé par le fait que le liquide contenant de la bière sortant de la centrifugeuse est refroidi avant d'être renvoyé dans le bac de recyclage.

8. Procédé selon l'une des revendications 1 à 7, caractérisé par le fait que, avant d'être utilisée comme liquide d'extraction, l'eau est traitée et carbonisée en passant par un échangeur de cations, un filtre, un stérilisateur UV et un désaérateur, et refroidie.

9. Procédé selon l'une des revendications 3 à 8, caractérisé par le fait que, en fin du procédé d'extraction, le contenu du bac de recyclage est dirigé vers une unité de clarification.

10. Procédé selon la revendication 9, caractérisé par le fait que l'unité de clarification est précédée d'un refroidisseur.

11. Procédé selon les revendications 9 ou 10, caractérisé par le fait que comme unité de clarification on utilise une centrifugeuse de clarification à haute performance.

12. Procédé selon l'une des revendications 1 à 11, caractérisé par le fait que le liquide contenant de la bière est stabilisé par voie physico-chimique au moyen d'agents de stabilisation.

13. Procédé selon l'une des revendications 1 à 12, caractérisé par le fait que le liquide contenant de la bière est mélangé avec du $CO_2$ ou un autre gaz inerte de telle manière qu'il s'effectue un lavage de ce liquide.

14. Procédé selon l'une des revendications 1 à 13, caractérisé par le fait que le liquide contenant de la bière est envoyé vers le procédé de brassage y inclus le procédé de séparation des troubles.